# EUROPEAN PATENT APPLICATION

(11) **EP 3 835 344 A1**
(43) Date of publication of application: **16.06.2021**
(21) Application number: 19846300.2
(22) Date of filing: 01.08.2019
(51) Int. Cl.: C08J 9/14, C08K 3/02, C08K 9/00, C08L 61/10

(54) **RESIN COMPOSITION FOR PHENOLIC FOAM PRODUCTION**

(30) Priority: 10.08.2018 JP 2018151239
(71) Applicant: Asahi Yukizai Corporation, Nobeoka-shi, Miyazaki 882-8688 (JP)
(72) Inventor: YAMADA, Shuji, Niwa-gun, Aichi 480-0105 (JP)
(74) Representative: Mewburn Ellis LLP
(86) International application number: PCT/JP2019/030328
(87) International publication number: WO 2020/031863

(57) **Abstract**

Provided is a resin composition for phenolic foam production, the resin composition being capable of imparting, to a phenolic foam formed by using a specific blowing agent having a low global warming potential, both further improved flame retardancy and excellent thermal insulation properties from immediately following production and over the medium to long term. The resin composition for phenolic foam production contains a resol-type phenolic resin as an essential component, also contains, as a blowing agent, a chlorinated aliphatic hydrocarbon and/or an aliphatic hydrocarbon, or a halogenated alkene, and can be foamed and cured by an acid curing agent. The resin composition for phenolic foam production further contains a red phosphorus powder dispersed therein.

## Description

### TECHNICAL FIELD

The present invention relates to a resin composition for producing phenolic foam. Specifically, the invention relates to a technique for further improving phenolic foam in terms of both of its flame resistance or fireproofness, and long-term stability of its heat insulation performance, which phenolic foam is obtained by using a resol-type phenolic resin and an acid curing agent as the essential components.

### BACKGROUND ART

Conventionally, chlorofluorocarbon-based blowing agents have been widely used for producing phenolic resin foam products, that is, so-called phenolic foam, by foaming and curing a resol-type phenolic resin in combination with an acid curing agent. However, since chlorofluorocarbon-based blowing agents have problems such as destruction of the ozone layer and a high degree of global warming potential, currently it is recommended to use chlorinated aliphatic hydrocarbon-based blowing agents, hydrocarbon-based blowing agents, halogenated alkenes and the like, as a desirable blowing agent. For example, as a blowing agent whose global warming potential is low, JP2007-161810A teaches to use chlorinated aliphatic hydrocarbon-based blowing agents, and JP2008-88208A discloses hydrocarbon-based blowing agents. Furthermore, JP2007-70511A discloses using chlorinated aliphatic hydrocarbon-based blowing agents and hydrocarbon-based blowing agents together. In addition, JP2014-521798A presents halogenated alkenes as the latest blowing agent which has a low degree of global warming potential and an ozone depletion coefficient of zero, and further gives flame resistance to the phenolic foam.

Meanwhile, although the phenolic foam which is formed by foaming the phenolic resin is admitted to have a relatively high flame resistance by itself, its flame resistance is not enough to sufficiently meet the safety requirements in fields such as construction, civil engineering and manufacture of industrial products. For this reason, improvement of the flame resistance of intended phenolic foam has been pursued by adding a flame retardant to a resin composition for producing phenolic foam. For example, JPH02-49037A teaches to use phosphorus compounds, sulfur compounds or boron compounds as the flame retardant, and to obtain useful flame-resistant phenolic foam by adding those compounds to the resin composition for producing phenolic foam. Also the above-mentioned JP2007-161810A and JP2007-70511A suggest using: metal hydroxides and metal oxides such as aluminum hydroxide, magnesium hydroxide, calcium oxide and aluminum oxide; metal powders such as zinc powder; and metal carbonates such as calcium carbonate and magnesium carbonate, as an inorganic filler which is usually added to the resin composition for producing phenolic foam, so that the phenolic foam obtained by foaming the resin composition has improved flame resistance or fireproofness.

Meanwhile, when the various kinds of flame retardants suggested in the above-mentioned publication documents are used for producing phenolic foam having further improved flame resistance, in addition to the blowing agent which has a low degree of global warming potential as described above, the obtained phenolic foam unavoidably has a high degree of thermal conductivity, resulting in deterioration of its heat insulation performance. Furthermore, the thermal conductivity of the phenolic foam remarkably increases over time as the phenolic foam is used for a long period of time, whereby it is quite difficult to achieve the long-term stability of heat insulation performance of the phenolic foam.

### PRIOR ART DOCUMENTS

### PATENT DOCUMENTS

Patent Document 1: JP2007-161810A
Patent Document 2: JP2008-88208A
Patent Document 3: JP2007-70511A
Patent Document 4: JP2014-521798A
Patent Document 5: JPH02-49037A

### SUMMARY OF THE INVENTION

### TECHNICAL PROBLEMS

The inventor of the present invention has made intensive studies to solve the problem that the thermal conductivity of the phenolic foam unavoidably increases due to the addition of the flame retardant to the phenolic foam for further improving its flame resistance, in the case where the phenolic foam is formed by using the chlorinated aliphatic hydrocarbon and/or the aliphatic hydrocarbon, or the halogenated alkene as the effective blowing agent with a low degree of global warming potential. As a result, the inventor has found that using the specific blowing agent with a low degree of global warming potential and a specific kind of flame retardant together can effectively improve the thermal conductivity of the phenolic foam to be obtained, and further permits the phenolic foam to exhibit an excellent thermal conductivity from just after its production and over the medium to long term. Thus, the present invention was completed.

Therefore, a problem to be solved by the present invention is to provide a resin composition for producing phenolic foam, which resin composition uses a specific blowing agent with a low degree of global warming potential so as to avoid environmental destruction as much as possible, and also advantageously allows phenolic foam formed therefrom to simultaneously achieve both of further improved flame resistance and remarkable heat insulation performance. It is another problem to be solved by the invention to provide a resin composition for advantageously producing phenolic foam which does not suffer from increase of its thermal conductivity unavoidably caused by using the flame retardant, and can exhibit the improved thermal conductivity from just after its production and over the medium to long term.

### SOLUTION TO PROBLEMS

To solve the above-mentioned problems, the present invention provides a resin composition for producing phenolic foam, comprising a resol-type phenolic resin, as its essential component, and a blowing agent containing a chlorinated aliphatic hydrocarbon and/or an aliphatic hydrocarbon; being foamed and cured by an acid curing agent; and further comprising red phosphorus powder in a dispersed state.

In the resin composition for producing phenolic foam according to the invention, a mixture of isopentane and isopropylchloride is preferably used as the blowing agent.

Furthermore, to solve the above-mentioned problems, the present invention also provides a resin composition for producing phenolic foam, comprising a resol-type phenolic resin, as its essential component, and a blowing agent containing a halogenated alkene; being foamed and cured by an acid curing agent; and further comprising red phosphorus powder in a dispersed state.

In one preferred embodiment of the above-mentioned resin composition for producing phenolic foam according to the invention, the red phosphorus powder is contained in an amount of 0.3-30 parts by mass per 100 parts by mass of the resol-type phenolic resin.

In another preferred embodiment of the above-mentioned resin composition for producing phenolic foam according to the invention, the red phosphorus powder has a coating layer on its surface, whereby the phenolic foam having the excellent properties according to the invention is advantageously formed.

Furthermore, in the invention, it is advantageous that the coating layer is formed of a metal oxide or a metal hydroxide and/or a thermosetting resin.

According to another preferred embodiment of the invention, p-toluensulfonic acid and xylenesulfonic acid are used together as the acid curing agent.

In addition, the resol-type phenolic resin is preferably prepared to have a viscosity of 2000 mPa·s or more at 25°C.

### ADVANTAGEOUS EFFECTS OF THE INVENTION

As described above, in the resin composition for producing phenolic foam according to the invention, chlorinated aliphatic hydrocarbons and/or aliphatic hydrocarbons, or halogenated alkenes are used as the blowing agent, so that environmentally friendly phenolic foam having a small impact on the environment can be advantageously formed. Furthermore, the resin composition contains the red phosphorus powder as the specific flame retardant, in combination with the above-mentioned blowing agent with a low degree of global warming potential, thereby permitting further improved flame resistance of the obtained phenolic foam, and effectively reducing or preventing undesirable increase of its thermal conductivity necessarily caused by using the flame retardant.

As described above, the resin composition for producing phenolic foam according to the invention contains the red phosphorus powder as the flame retardant, in addition to the specific blowing agent with a low degree of global warming potential. For this reason, when phenolic foam is obtained by foaming and curing that resin composition, the thermal conductivity of the obtained phenolic foam can be effectively kept low immediately after the production, and even after the medium and long period of time has passed. Thus, useful phenolic foam exhibiting excellent heat insulation performance with long-term stability can be provided.

### MODE FOR CARRYING OUT THE INVENTION

Meanwhile, a resol-type phenolic resin used in the present invention is advantageously produced by using an aldehyde in an amount of about 1.0-3.0 mol, and preferably about 1.5-2.5 mol, per 1 mol of a phenol, according to the following method. That is, the aldehyde and the phenol are subjected to reaction under the presence of an alkaline reaction catalyst at a temperature ranging, for example, from 50°C to the reflux temperature, and the obtained reaction product is subjected to neutralization treatment. Subsequently, the reaction product is dehydrated and condensed under a reduced pressure condition, so as to have specific properties such as a viscosity of 2000 mPa·s or more at 25°C and a water content of 3-20%, and preferably 5-18%. The reaction product is then cooled. Finally, suitable known additives are added to the reaction product as necessary.

Of course, in addition to the resol-type phenolic resin produced as described above, various known resol-type phenolic resins which are cured by an acid curing agent can be suitably used in the invention. It is also possible to use a resol-type phenolic resin modified by a suitable modifier.

By preparing the resol-type phenolic resin as described above so as to have a viscosity of 2000 mPa·s or more, preferably 2000-100000 mPa·s, more preferably 3000-80000 mPa·s, and further preferably 4000-30000 mPa·s at 25°C, an intended resin composition is further effectively obtained. In particular, red phosphorus powder is allowed to be further effectively contained in a dispersed state, and the stability of the dispersed state can be more advantageously increased, thereby improving the flame resistance and the thermal conductivity of the obtained phenolic foam. When the viscosity of the resol-type phenolic resin is less than 2000 mPa·s, the red phosphorus powder is sedimented and is unevenly distributed, whereby the formed phenolic foam suffers from uneven portions and fails to have a sufficient degree of flame resistance and thermal conductivity. In contrast, an excessively high viscosity over 100000 mPa·s causes difficulty in producing the intended phenolic foam.

Examples of phenols, which are one of the raw materials of the resol-type phenolic resin used in the method according to the invention, include phenol, o-cresol, m-cresol, p-cresol, p-tert-butylphenol, m-xylenol, bisphenol F and bisphenol A. Examples of aldehydes, which are the other of the raw materials and are used in combination with the phenol, include formaldehyde, paraformaldehyde, trioxane, polyoxymethylene and glyoxal. Furthermore, examples of reaction catalysts include potassium hydroxide, sodium hydroxide, barium hydroxide, calcium hydroxide, potassium carbonate and ammonia. Of course, the phenol, the aldehyde and the reaction catalyst are by no means limited to those described above, and any one or any combination of known phenols, aldehydes and reaction catalysts are suitably used.

In the invention, chlorinated aliphatic hydrocarbons and/or aliphatic hydrocarbons, or halogenated alkenes, which have a low degree of global warming potential, are used as a blowing agent together with the above-mentioned resol-type phenolic resin, so as to form a resin composition for producing phenolic foam.

The chlorinated aliphatic hydrocarbon as the blowing agent is preferably a chlorinated product of a linear- or branched-chain aliphatic hydrocarbon having typically about 2-5 carbon atoms, the number of bonded chlorine atoms being 1-4 in general. Specific examples of such chlorinated aliphatic hydrocarbons include dichloroethane, propylchloride, isopropylchloride, butylchloride, isobutylchloride, pentylchloride and isopentylchloride. Any one or any combination of these chlorinated aliphatic hydrocarbons can be used, but chloropropanes such as propylchloride and isopropylchloride are preferred among them, and isopropylchloride is particularly preferably used.

The aliphatic hydrocarbon as the blowing agent is suitably selected from conventional hydrocarbon-based blowing agents having about 3-7 carbon atoms, and examples of aliphatic hydrocarbons include propane, butane, pentane, isopentane, hexane, isohexane, neohexane, heptane, isoheptane and cyclopentane. Any one or any combination of these aliphatic hydrocarbons can be used.

Furthermore, in the invention, mixed blowing agents including the above-mentioned chlorinated aliphatic hydrocarbons and aliphatic hydrocarbons are also preferably used. The mixture ratio of the aliphatic hydrocarbon to the chlorinated aliphatic hydrocarbon is preferably between 25:75 and 5:95 on the mass basis. The mixed blowing agent of the two kinds of blowing agents preferably consists of isopentane and isopropylchloride, the combination of which permits further advantageous achievement of the purpose of the invention.

In the invention, the blowing agent can be also the halogenated alkene, which contributes to a further improvement of the properties, in particular the flame resistance, of the obtained phenolic foam. The halogenated alkene with the above-mentioned characteristic also includes so-called halogenated olefins and halogenated hydroolefins, and is typically formed by bonding chlorine or fluorine as a halogen to an unsaturated hydrocarbon derivative with 2-6 carbon atoms, for example propene, butene, pentene and hexene. These unsaturated hydrocarbon derivatives have 3-6 fluorine substituents, and can also contain other substituents, for example chlorine. Examples of such halogenated alkenes include tetrafluoropropene, fluorochloropropene, trifluoromonochloropropene, pentafluoropropene, fluorochlorobutene, hexafluorobutene and mixtures thereof.

Specific examples of hydrofluoroolefins (HFO) which are one of the halogenated alkenes (halogenated olefins) include pentafluoropropene such as 1, 2, 3, 3, 3-pentafluoropropene (HF01225ye), tetrafluoropropene such as 1, 3, 3, 3-tetrafluoropropene (HFO1234ze), 2, 3, 3, 3-tetrafluoropropene (HFO1234yf) and 1, 2, 3, 3-tetrafluoropropene (HFO1234ye), trifluoropropene such as 3, 3, 3-trifluoropropene (HFO1243zf), isomers of tetrafluorobutene (HFO1354), isomers of pentafluorobutene (HFO1345), isomers of hexafluorobutene (HFO1336) such as 1, 1, 1, 4, 4, 4-hexafluoro-2-butene (HFO1336mzz), isomers of heptafluorobutene (HFO1327), isomers of heptafluoropentene (HFO1447), isomers of octafluoropentene (HFO1438) and isomers of nonafluoropentene (HFO1429). In addition, examples of hydrochlorofluoroolefines (HCFO) include 1-chloro-3, 3, 3-trifluoropropene (HCFO-1233zd), 2-chloro-3, 3, 3-trifluoropropene (HCFO-1233xf), dichlorotrifluoropropene (HCFO1223), 1-chloro-2, 3, 3-trifluoropropene (HCFO-1233yd), 1-chloro-1, 3, 3-trifluoropropene (HCFO-1233zb), 2-chloro-1, 3, 3-trifluoropropene (HCFO-1233xe), 2-chloro-2, 2, 3-trifluoropropene (HCFO-1233xc), 3-chloro-1, 2, 3-trifluoropropene (HCFO-1233ye) and 3-chloro-1, 1, 2-trifluoropropene (HCFO-1233yc).

The total amount of the above-mentioned blowing agents is generally 1-30 parts by mass, and preferably 5-25 parts by mass, per 100 parts by mass of the resol-type phenolic resin.

The blowing agent used in the invention characteristically contains the above-mentioned chlorinated aliphatic hydrocarbon and/or aliphatic hydrocarbon, or the halogenated alkene. Furthermore, the blowing agent may also contain a suitable amount of fluorinated hydrocarbons (chlorofluorocarbon substitutes) such as 1, 1, 1, 3, 3-pentafluorobutane, fluorinated chlorine hydrocarbons such as trichloromonofluoromethane and trichlorotrifluoroethane, water, ether compounds such as isopropyl ether, gases such as nitrogen, argon and carbon dioxide, and air, as long as they do not have adverse effects on the purpose of the invention.

The acid curing agent used in the invention is a curing catalyst, that is, a component for promoting curing reaction of the above-mentioned resol-type phenolic resin, and any conventional acid curing agent may be suitably selected and used. Examples of acid curing agents include: aromatic sulfonic acids such as benzenesulfonic acid, phenolsulfonic acid, cresolsulfonic acid, toluenesulfonic acid, xylenesulfonic acid and naphthalenesulfonic acid; aliphatic sulfonic acids such as methanesulfonic acid and trifluoromethanesulfonic acid; and inorganic acids such as sulfuric acid, phosphoric acid, polyphosphoric acid and fluoboric acid. Any one or any combination of these acid curing agents may be used. Among these acid curing agents, phenolsulfonic acid, toluenesulfonic acid and naphthalenesulfonic acid are particularly preferably used. They permit a desirable curing rate in the production of the phenolic foam, whereby a further improved balance between the curing and the foaming by the blowing agent is permitted in the resol-type phenolic resin, to thereby achieve a desirable foaming structure of the phenolic foam. In the present invention, it is particularly recommended to use paratoluensulfonic acid and xylenesulfonic acid together. The amount of paratoluensulfonic acid is preferably more than that of xylenesulfonic acid on the mass basis. Specifically described, it is advantageous to set the ratio by mass of the paratoluensulfonic acid to the xylenesulfonic acid between 51:49 and 95:5.

The amount of use of the acid curing agent is suitably determined depending on its kind and conditions including a temperature at the time of mixing with the above-mentioned resol-type phenolic resin. In the invention, it is preferable to use the acid curing agent in an amount of 1-50 parts by mass, preferably 5-30 parts by mass, and particularly preferably 7-25 parts by mass, per 100 parts by mass of the resol-type phenolic resin. When the amount of the acid curing agent is less than 1 part by mass, the curing does not proceed at a suitable rate. On the other hand, when its amount is more than 50 parts by mass, the curing rate becomes excessively high, and the intended phenolic foam cannot be obtained.

The resin composition for producing phenolic foam, which comprises the above-mentioned essential components according to the invention, contains red phosphorus powder in a dispersed state as a flame retardant, for the purpose of giving excellent flame resistance to phenolic foam obtained from the resin composition, reducing or preventing increase of the thermal conductivity of the phenolic foam, and maintaining its low thermal conductivity over the medium to long term. Any conventional red phosphorus powder may be used, usually by selecting from those commercially available. Examples of commercially available red phosphorus powder include products sold in the name of "NOVARED" and "NOVAEXCEL" manufactured by Rin Kagaku Kogyo Co., Ltd., "HISHIGUARD" manufactured by Nippon Chemical Industry Co., Ltd. and "EXOLIT" manufactured by Clariant AG. The above-mentioned red phosphorus powder preferably has a coating layer on its surface, so as to improve its handling ease and processability, and to enhance its dispersability into the resin composition and advantageously improve the effect of its addition. Specifically described, it is advantageous to use red phosphorus powder consisting of particles having a coating layer on their surface, which coating layer is formed of an inorganic compound including metal oxides and metal hydroxides such as aluminum hydroxide, magnesium hydroxide, zinc hydroxide, titanium hydroxide, aluminum oxide, magnesium oxide, zinc oxide and titanium oxide, and/or a thermosetting resin including phenolic resin, furan resin and xylene-formaldehyde resin. The coating layer is generally formed in an amount of 1-30 parts by mass per 100 parts by mass of the red phosphorus powder.

The amount of use of the red phosphorus powder is determined within the range of generally 0.3-30 parts by mass, preferably 1-25 parts by mass, and further preferably 2-20 parts by mass, per 100 parts by mass of the resol-type phenolic resin. When the amount of the red phosphorus powder is too small, its effect to give the flame resistance to the phenolic foam is not sufficiently exhibited. On the other hand, an excessively large amount of red phosphorus powder results in a higher thermal conductivity of the phenolic foam on the contrary, increases the viscosity of the composition to which the red phosphorus powder has been added so as to cause problems such as stirring deficiency, and makes it difficult to maintain a low thermal conductivity over the medium to long term.

Furthermore, the red phosphorus powder in the invention typically has an average particle diameter of 1-100 µm, and preferably 5-50 µm. The red phosphorus powder with an undesirably small particle diameter is difficult to handle and is not likely to achieve uniform dispersion into the resin composition, for example. In contrast, the red phosphorus powder with an excessively large particle diameter tends not to be uniformly dispersed in the resin composition either, whereby the purpose of the invention is not sufficiently achieved.

As described above, the resin composition for producing phenolic foam according to the invention indispensably contains, together with the above-mentioned resol-type phenolic resin, the blowing agent including the chlorinated aliphatic hydrocarbon and/or aliphatic hydrocarbon, or the halogenated alkene, and the acid curing agent. In addition, the resin composition may contain known foam stabilizers, inorganic fillers, plasticizers and urea as necessary.

Among the above-mentioned additives contained as necessary, the foam stabilizer is used for supporting mixture and emulsification of the mixed components in the resin composition, dispersing generated gas and stabilizing membranes of foam cells, for example. The kind of the foam stabilizer is not limited, and any foam stabilizer known in this technical field can be selected and used. Particularly preferably used are nonionic surfactants such as polysiloxane-based compounds, polyoxyethylenesorbitan fatty acid ester, ethylene oxide (EO) adducts of alkylphenol and EO adducts of castor oil. Any one or any combination of these foam stabilizers may be used in an amount not being limited, but generally ranging from 0.5 to 10 parts by mass per 100 parts by mass of the resol-type phenolic resin.

Furthermore, examples of inorganic fillers include metal hydroxides and metal oxides such as aluminum hydroxide, magnesium hydroxide, calcium hydroxide, magnesium oxide, aluminum oxide and zinc oxide; powders of metals such as zinc; and metal carbonates such as calcium carbonate, magnesium carbonate, barium carbonate and zinc carbonate. Any one or any combination of these inorganic fillers can be used. The inorganic filler permits improvement of the flame resistance or fireproofness of the phenolic foam. Needless to say, the amount of use of the inorganic filler is suitably determined within the range not hindering the purpose of the invention.

The plasticizer is advantageously used for giving flexibility to cell walls of the phenolic foam and reducing deterioration of its heat insulation performance over time, thereby advantageously contributing to the purpose of the invention as in the case of the red phosphorus powder as the flame retardant. The kind of the plasticizer is not limited, and any known plasticizer which has been used for producing phenolic foam can be used. For example, triphenyl phosphate, dimethyl terephthalate and dimethyl isophthalate may be used, and polyesterpolyol can be effectively used, too. In particular, polyesterpolyol has a good compatibility with a hydrophilic phenolic resin solution, and can be uniformly mixed with the phenolic resin, since polyesterpolyol has a structure including an ester bond and a hydroxyl group, which are hydrophilic and excellent in surface activity. Furthermore, polyesterpolyol is a preferable plasticizer also in that it prevents uneven distribution of cells. That is, polyesterpolyol allows the cells to be distributed evenly over the entirety of the foam, thereby permitting easy formation of phenolic resin foam (phenolic foam) having a uniform quality. The plasticizer is used generally in an amount of 0.1-20 parts by mass, preferably 0.5-15 parts by mass, and more preferably 1-12 parts by mass, per 100 parts by mass of the resol-type phenolic resin, whereby the effect of giving flexibility to the cell walls of the obtained phenolic foam is advantageously exhibited without deteriorating other properties of the phenolic foam. Thus, the purpose of the invention is further advantageously achieved.

In addition, the resin composition for producing phenolic foam obtained according to the invention preferably contains urea. Urea permits reducing an initial thermal conductivity of the phenolic foam to be obtained, and achieving a high degree of strength, in particular a low degree of brittleness, of the phenolic foam. Furthermore, urea advantageously contributes to keeping the thermal conductivity of the phenolic foam low over the medium to long term.

The resin composition for producing phenolic foam containing the above-mentioned components according to the invention can be prepared as follows, for example. First, the above-mentioned red phosphorus powder is added to and mixed with the resol-type phenolic resin described above, and the above-mentioned inorganic filler, foam stabilizer, plasticizer, urea and other components are added as necessary, to thereby obtain a mixture to which the above-mentioned chlorinated aliphatic hydrocarbon and/or aliphatic hydrocarbon, or halogenated alkene are/is added as the blowing agent. The mixture is then charged into a mixer together with the acid curing agent, and stirred, whereby the resin composition is prepared.

For forming the intended phenolic foam by using the thus prepared resin composition for producing phenolic foam, various known methods can be employed. Examples of forming methods include: (1) a method in which the resin composition is cast on a continuous conveyor belt, and foamed and cured; (2) a method in which the resin composition is partially cast, foamed and cured; (3) a method in which the resin composition is filled in a mold, and foamed and cured under pressure in the mold; (4) a method in which the resin composition is charged into a certain large space, and foamed and cured to form a foamed block; and (5) a method in which the resin composition is foamed within a hollow space while being introduced into the hollow space under pressure.

The above-mentioned forming method (1) as one of the forming methods includes the steps of ejecting the resin composition for producing phenolic foam on a continuously movable carrier, and passing the ejected resin composition through a heating zone to foam and form the ejected resin composition, whereby desired phenolic foam is produced. More specifically described, in the forming method (1), the above-mentioned resin composition for producing phenolic foam is ejected onto a face material on a conveyor belt, and another face material is placed on the upper surface of the ejected resin material on the conveyor belt. Then, the resin material is introduced into a curing furnace. In the curing furnace, the resin material is pressed with another conveyor belt to be adjusted to a predetermined thickness, and the resin material is foamed and cured at about 60-100°C for about 2-15 minutes. The foam taken out of the curing furnace is cut into a predetermined length, whereby a phenolic foam having a desired shape is produced.

The kind of the face material used in the invention is not limited, and is typically selected from nonwoven fabrics of natural fiber, synthetic fiber such as polyester fiber and polyethylene fiber, inorganic fiber such as glass fiber; paper; aluminum-foil-clad nonwoven fabrics; metal plates and metal foils. Preferred face materials are nonwoven glass fabrics, spunbonded nonwoven fabrics, aluminum-foil-clad nonwoven fabrics, metal plates, metal foils, plywood, structural panels, particle boards, hardboards, wood cement boards, flexible plates, perlite plates, calcium silicate plates, magnesium carbonate plates, pulp cement boards, sheathing boards, medium density fiber boards, plaster boards, lath sheets, volcanic vitreous composite plates, natural stone, bricks, tiles, shaped materials of glass, shaped materials of light-weight cellular concrete, shaped materials of cement mortar, and shaped materials using water-curable cement hydrates as a binder component such as shaped materials of glass-fiber-reinforced cement. The face material may be provided on one surface of the phenolic foam, or on respective opposite surfaces of the phenolic foam. When the face materials are provided on the respective opposite surfaces of the foam, the face materials may be the same or different from each other. Further, the face material(s) may be later bonded to the surface(s) with an adhesive.

The thus obtained phenolic foam has an initial thermal conductivity of generally 0.0200 W/m·K or less at 20°C, and preferably 0.0195 W/m·K or less at 20°C. Furthermore, the phenolic foam has an excellent property that its thermal conductivity measured at an accelerated test for examining the long-term stability of the thermal conductivity is generally 0.0250 W/m·K or less at 20°C, and preferably 0.0210 W/m·K or less at 20°C. In addition, a closed cell content of the above-mentioned phenolic foam is generally 80% or more, preferably 85% or more, and more preferably 90% or more, whereby the phenolic foam advantageously exhibits a desirable thermal conductivity, as well as excellent flame resistance or fireproofness.

Furthermore, the phenolic foam obtained according to the invention has a density in the range of 10 kg/m³-150 kg/m³, preferably 15 kg/m³-100 kg/m³, more preferably 15 kg/m³-70 kg/m³, further preferably 20 kg/m³-50 kg/m³, and the most preferably 20 kg/m³-40 kg/m³. Phenolic foam having a density lower than 10 kg/m³ suffers from a low degree of strength, and the foam (foam product) may be broken at the time of delivery and construction. In addition, when the phenolic foam has a low density, cell membranes dividing cells in the foam (foam product) tend to be thin. In the case where the cell membrane is thin, the blowing agent in the foam is easily substituted with the air. Furthermore, the thin cell membrane is likely to break while being foamed, whereby a good closed cell structure cannot be obtained in the resultant phenolic foam. Thus, the long-term heat insulation performance of the phenolic foam with a low density tends to decline. On the other hand, when the density of the phenolic foam exceeds 150 kg/m³, the heat conductivity of solids derived from solid components including the phenolic resin becomes undesirably high, and the heat insulation performance of the phenolic foam tends to decline.

### EXAMPLES

To clarify the present invention more specifically, some examples of the present invention will be described, and compared with comparative examples. However, it is to be understood that the present invention is by no means limited by the details of the illustrated examples. It is to be understood that the present invention may be embodied with various changes, modifications and improvements other than those described in the following examples and the preceding detailed description, on the basis of the knowledge of those skilled in the art, without departing from the spirit and scope of this invention. In the examples and comparative examples described below, "%" and "part" respectively indicate "% by mass" and "part by mass", unless otherwise specified.

### - Example 1 -

1600 parts of phenol, 2282 parts of 47% formalin and 41.6 parts of a 50% aqueous solution of sodium hydroxide were charged in a three-necked flask equipped with a reflux condenser, a thermometer and a stirrer, and a reaction was carried out at 80°C for 70 minutes. The reaction mixture was cooled to 40°C, neutralized with a 50% aqueous solution of p-toluensulfonic acid, and dehydrated and condensed to have a moisture content of 10% under heat and at a reduced pressure, whereby a liquid resol-type phenolic resin was obtained. The obtained liquid resol-type phenolic resin had a viscosity of 10000 mPa·s at 25°C, a number average molecular weight of 380 and a free phenol content of 4.0%.

Then, to 100 parts of the thus obtained liquid resol-type phenolic resin, there were added 3 parts of an EO adduct of castor oil (molar amount of the added EO was 22) as a foam stabilizer, and 5 parts of urea as an additive. These liquid resol-type phenolic resin, foam stabilizer and additive were mixed with each other, whereby a uniform phenolic resin mixture was obtained.

Subsequently, to 108 parts of the thus obtained phenolic resin mixture, an additive (flame retardant), a blowing agent and a curing agent were added, the additive being 1.0 part of red phosphorus powder (NOVAEXCEL140 available from Rin Kagaku Kogyo Co., Ltd.; average particle diameter: 25-35 µm; with surface coating), the blowing agent being 9.0 parts of a mixture consisting of isopropylchloride and isopentane in a ratio by mass of 85:15, and the curing agent being 16 parts of a mixture consisting of p-toluenesulfonic acid and xylenesulfonic acid in a ratio by mass of 2:1. The phenolic resin mixture, the additive, the blowing agent and the curing agent were stirred and mixed with each other, whereby a foamable phenolic resin forming material, which is a phenolic resin composition for producing phenolic foam, was prepared.

The obtained foamable phenolic resin forming material was filled in a formwork which had a width of 300 mm, a length of 300 mm and a thickness of 50 mm, and which had been preheated to a temperature of 70-75°C. The forming material filled in the formwork was placed in an oven at 70-75°C and held in the oven for 10 minutes for foaming and curing, and further heated in a heating furnace at a temperature of 70°C for 12 hours for postcure. Thus, a phenolic foam (phenolic resin foam) was produced.

### - Examples 2 to 8 -

Various phenolic resin foams were produced in the same manner as in the Example 1, except that the red phosphorus powder was used in amounts indicated in the following Table 1.

### - Example 9 -

A phenolic resin foam was produced in the same manner as in the Example 4, except that hydrofluoroolefine (1,1,1,4,4,4-hexafluoro-2-butene: HFO-1336mzz, available from Chemours Company) was used as the blowing agent in an amount of 17.5 parts, in place of the blowing agent used in the Example 4.

### - Comparative Example 1 -

A phenolic resin foam was produced in the same manner as in the Example 1, except that the red phosphorus powder was not used.

### - Comparative Example 2 -

A phenolic resin foam was produced in the same manner as in the Example 4, except that aluminum hydroxide (B1403 available from Nippon Light Metal Company, Ltd.) which is an inorganic filler was used in place of the red phosphorus powder.

### - Comparative Example 3 -

A phenolic resin foam was produced in the same manner as in the Example 4, except that ADK STAB PFR (available from ADEKA Corporation), which is a condensed phosphate-based flame retardant, was used in place of the red phosphorus powder.

Each of the thus obtained phenolic resin foams (phenolic foams) was measured of the density, the initial thermal conductivity, the long-term stability of the thermal conductivity, the closed cell content and the compressive strength according to the following methods. Further, the obtained phenolic foam was also subjected to a flame resistance test described later, for evaluating the total heat release amount, the maximum heat release rate and the state of the phenolic foam after the test. The results are indicated in the following Tables 1 and 2.

### (1) Measurement of the density

The density of each foam was measured according to JIS A 9511:2003, "5.6 Density".

### (2) Measurement of the initial thermal conductivity

A 300 mm x 300 mm square sample of the phenolic resin foam was provided and cut into 200 mm x 200 mm square with a thickness of 50 mm. Then, the thermal conductivity of the sample was measured with a thermal conductivity tester HC-074 304 (available from Eko Instruments Co., Ltd.) according to the Heat flow meter method specified in JIS A 1412-2:1999, with a low temperature plate being set at 10°C, and a high temperature plate being set at 30°C. Here, the thermal conductivity of the sample after it was left in a 70°C atmosphere for 4 days was defined as its initial thermal conductivity.

### (3) Evaluation of the long-term stability of the thermal conductivity

An accelerated test for evaluating the long-term stability of the thermal conductivity was performed according to the method defined in ISO 11561 Annex B. In the accelerated test, the highest temperature that can be reached in an architectural structure was supposed to be 70°C, and therefore the sample of the phenolic resin foam was measured of its thermal conductivity after being left in a 70°C atmosphere for 25 weeks. The long-term stability of the thermal conductivity was evaluated based on the thermal conductivity of the sample obtained in the accelerated test.

### (4) Measurement of the closed cell content

The closed cell content of the sample of the phenolic resin foam was measured according to ASTM D2856.

### (5) Measurement of the compressive strength

The compressive strength of the sample of the phenolic resin foam was measured according to the "5.9 Compressive strength" of JIS A 9511:2003.

### (6) Evaluation of the flame resistance

A sample was prepared from each of the phenolic resin foams so as to have a height of 99±1 mm and a width of 99±1 mm, with a thickness of 50 mm. The sample was measured of its total heat release amount and maximum heat release rate in 5 minutes of heating by using a cone calorimeter (CONE III, manufactured by Toyo Seiki Seisakusho, Ltd.), according to "Method of tests and evaluations of fireproof and fire-resisting performance, 4.12.1 Tests and evaluations of exothermicity" edited by the General Building Research Corporation of Japan. The mean value of the obtained total heat release amounts and maximum heat release rates for three samples per each foam was defined as the result of the measurement. In addition, the samples after the evaluation were observed to see whether they had any crack and hole penetrating through their reverse sides.

**Table 1**

| | Added amount of red phosphorus powder (parts) | Added amount of aluminum hydroxide (parts) | Added amount of condensed phosphate (parts) | Density (kg/m³) | Initial thermal conductivity [20°C] (W/m·K) | Thermal conductivity after accelerated test [20°C] (W/m·K) | Increase rate of thermal conductivity |
|---|---|---|---|---|---|---|---|
| Example 1 | 1 | - | - | 34 | 0.01908 | 0.01940 | 1.02 |
| Example 2 | 2 | - | - | 34 | 0.01911 | 0.01939 | 1.01 |
| Example 3 | 5 | - | - | 34 | 0.01902 | 0.01933 | 1.02 |
| Example 4 | 10 | - | - | 34 | 0.01906 | 0.01943 | 1.02 |
| Example 5 | 15 | - | - | 34 | 0.01909 | 0.01989 | 1.04 |
| Example 6 | 20 | - | - | 34 | 0.01908 | 0.01990 | 1.04 |
| Example 7 | 25 | - | - | 34 | 0.01918 | 0.02099 | 1.09 |
| Example 8 | 30 | - | - | 34 | 0.01908 | 0.02465 | 1.29 |
| Example 9 | 10 | - | - | 34 | 0.01779 | 0.01901 | 1.07 |
| Comparative Example 1 | - | - | - | 34 | 0.01915 | 0.01930 | 1.01 |
| Comparative Example 2 | - | 10 | - | 34 | 0.02140 | 0.02753 | 1.29 |
| Comparative Example 3 | - | - | 10 | 34 | 0.03357 | 0.03750 | 1.12 |

**Table 2**

| | Closed cell content (%) | Compressive strength (N/cm²) | Evaluation of flame resistance | | |
|---|---|---|---|---|---|
| | | | Total heat release amount (MJ/m²) | Maximum heat release rate (kW/m²) | Presence of cracks and holes penetrating through the reverse side |
| Example 1 | 94 | 17.4 | 9.2 | 64 | No |
| Example 2 | 94 | 16.9 | 7.8 | 52 | No |
| Example 3 | 94 | 16.0 | 6.6 | 47 | No |
| Example 4 | 93 | 16.5 | 4.2 | 53 | No |
| Example 5 | 93 | 16.4 | 4.2 | 44 | No |
| Example 6 | 93 | 15.6 | 5.4 | 57 | No |
| Example 7 | 92 | 14.3 | 5.0 | 69 | No |
| Example 8 | 80 | 10.3 | 7.6 | 64 | No |
| Example 9 | 91 | 15.4 | 3.0 | 12 | No |
| Comparative Example 1 | 94 | 18.0 | 17.1 | 95 | Yes |
| Comparative Example 2 | 80 | 14.1 | 12.0 | 75 | No |
| Comparative Example 3 | 5 | 11.0 | 9.4 | 41 | No |

As is apparent from the results shown in Tables 1 and 2, all of the phenolic resin foams formed in the Examples 1-9 had an initial thermal conductivity of 0.0192 W/m· K or less, and a thermal conductivity of 0.0250 W/m·K or less even after the accelerated test for evaluating the long-term stability of the thermal conductivity. Thus, it was recognized that the phenolic resin foams formed in the Examples 1-9 were remarkably excellent in their initial thermal conductivities, with the increase rate of the thermal conductivities being kept low over the medium to long term. Besides, the phenolic resin foams had a low degree of total heat release amount and maximum heat release rate in the evaluation of the flame resistance, thereby indicating that the foams were excellent in the flame resistance or fireproofness.

In contrast, the phenolic resin foam obtained in the Comparative Example 1 did not contain the red phosphorus powder as the flame retardant, and it was not given effective flame resistance and apparently combustible. The phenolic resin foams of the Comparative Examples 2 and 3, which contained aluminum hydroxide as the inorganic filler and the condensed phosphate-based flame retardant respectively, suffered from a high degree of initial thermal conductivity. In addition, the values of the thermal conductivity obtained in the accelerated test for evaluating its long-term stability drastically changed in the Comparative Examples 2 and 3, thereby indicating that the heat insulation performance was deteriorated over the medium to long term in these cases. It is noted that also the flame resistance was inferior in the phenolic resin foam of the Comparative Example 2.

### - Evaluation of the dispersion stability of the red phosphorus powder -

A resol-type phenolic resin was obtained as in the case of the Example 1, and water was suitably added to the resol-type phenolic resin, whereby various resol-type phenolic resins having viscosities as indicated in the following Table 3 were produced. The viscosity of each resol-type phenolic resin was measured at a test temperature of 25°C by means of a Brookfield viscometer, according to JIS K 7117-1. Subsequently, 100 parts of each of the resol-type phenolic resins and 10 parts of the red phosphorus powder were mixed with each other and accommodated in a glass screw tube bottle having a volume of 110 ml and a body diameter of 40 mm. The screw tube bottle was allowed to stand still for one week at the room temperature. Then, the mixture of the resol-type phenolic resin and the red phosphorus powder was evaluated with respect to whether it accumulated sediment in the screw tube bottle or not, and the thickness of a layer of the accumulated sediment, if any. The state of accumulation of sediment was evaluated as Good if no sediment was observed, and Average if the thickness of the sediment layer was 5 mm or less, and Poor if the thickness of the sediment layer was over 5 mm. The results are shown in the following Table 3.

**Table 3**

| Viscosity of the resol-type phenolic resin (mPa·s/25°C) | Evaluation of the sediment layer |
|---|---|
| 1000 | Poor |
| 2000 | Average |
| 3000 | Good |
| 4000 | Good |
| 10000 | Good |

As is shown in Table 3, in the case where the resol-type phenolic resin had a viscosity of 2000 mPa·s at 25°C, mixing of such a phenolic resin with the red phosphorus powder resulted in formation of a sediment layer. In contrast, the resol-type phenolic resin having a viscosity of 3000 mPa·s or more at 25°C did not suffer from accumulation of sediment, and thus formation of a sediment layer, when mixed with the red phosphorus powder.

## Claims

1. A resin composition for producing phenolic foam,
comprising a resol-type phenolic resin, as its essential component, and a blowing agent containing a chlorinated aliphatic hydrocarbon and/or an aliphatic hydrocarbon;
being foamed and cured by an acid curing agent; and
further comprising red phosphorus powder in a dispersed state.

2. The resin composition for producing phenolic foam according to claim 1, wherein the blowing agent is a mixture of isopentane and isopropylchloride.

3. A resin composition for producing phenolic foam,
comprising a resol-type phenolic resin, as its essential component, and a blowing agent containing a halogenated alkene;
being foamed and cured by an acid curing agent; and
further comprising red phosphorus powder in a dispersed state.

4. The resin composition for producing phenolic foam according to any one of claims 1 to 3, wherein the red phosphorus powder is contained in an amount of 0.3-30 parts by mass per 100 parts by mass of the resol-type phenolic resin.

5. The resin composition for producing phenolic foam according to any one of claims 1 to 4, wherein the red phosphorus powder has a coating layer on its surface.

6. The resin composition for producing phenolic foam according to claim 5, wherein the coating layer is formed of a metal oxide or a metal hydroxide and/or a thermosetting resin.

7. The resin composition for producing phenolic foam according to any one of claims 1 to 6, wherein p-toluensulfonic acid and xylenesulfonic acid are used together as the acid curing agent.

8. The resin composition for producing phenolic foam according to any one of claims 1 to 7, wherein the resol-type phenolic resin is prepared to have a viscosity of 2000 mPa· s or more at 25°C.
